# EUROPÄISCHE PATENTSCHRIFT

(11) **EP 3 181 386 B1**
(45) Veröffentlichungstag und Bekanntmachung des Hinweises auf die Patenterteilung: **20.01.2021**
(21) Anmeldenummer: 16204410.1
(22) Anmeldetag: 15.12.2016
(51) Int. Cl.: B60J 7/04, B29C 45/00, C03C 17/32

(54) **FAHRZEUGDACHGLASELEMENT, VERFAHREN UND WERKZEUG ZUM HERSTELLEN EINES FAHRZEUGDACHGLASELEMENTS**
VEHICLE ROOF GLASS ELEMENT, METHOD AND TOOL FOR PRODUCTION OF A VEHICLE ROOF GLASS ELEMENT
ÉLÉMENT EN VERRE POUR TOIT DE VÉHICULE, PROCÉDÉ ET OUTIL DESTINÉS À FABRIQUER UN ÉLÉMENT EN VERRE DE TOIT DE VÉHICULE

(30) Priorität: 16.12.2015 DE 102015121927
(43) Veröffentlichungstag der Anmeldung: 21.06.2017
(73) Patentinhaber: Roof Systems Germany GmbH, 63128 Dietzenbach (DE)
(72) Erfinder: LUDWIG, Matthias, 38159 Vechelde (DE); RÖDER, Joachim, 63165 Mühlheim (DE); KIRCHNER, Maximilian, 36381 Schlüchtern (DE)
(74) Vertreter: Prinz & Partner mbB

(56) Entgegenhaltungen:
- EP-A1- 0 576 179
- EP-A1- 1 859 931
- EP-A1- 1 894 901
- EP-A1- 2 253 447
- DE-A1-102011 053 166
- US-A- 4 795 667

## Beschreibung

Die Erfindung betrifft ein Fahrzeugdachglaselement mit einer außenseitigen Glasscheibe und einer innenseitig auf die Glasscheibe aufgeschäumten, transparenten Isolationsschicht sowie einen am innenseitigen Randabschnitt der Glasscheibe vorgesehenen, aufgespritzten oder angeschäumten, sich bis zum Rand erstreckenden, umlaufenden Rahmen.

Darüber hinaus betrifft die Erfindung ein Verfahren und ein Werkzeug zum Herstellen eines solchen Fahrzeugdachglaselements.

Fahrzeugdachglaselemente werden bei Panoramadächern oder bei Fahrzeughebe- und/oder -schiebedächern eingesetzt. Die Herstellung eines solchen Fahrzeugdachglaselements erfolgt in der Regel dadurch, dass zuerst die Glasscheibe hergestellt wird und innenseitig auf die Glasscheibe ein umlaufender Rahmen aus einem PUR-Material aufgespritzt oder angeschäumt wird. Dieser Rahmen schafft für das Fahrzeugdachglaselement die erforderliche Stabilität und in ihn werden üblicherweise weitere Verstärkungsteile eingebettet, die aus Metall sind und die auch die Ankoppelung eines beweglichen Fahrzeugdachglaselements an einen Antrieb ermöglicht sowie die Befestigung des Fahrzeugdachglaselements am Fahrzeugdach. Das Anspritzen oder Anschäumen zur Bildung des Rahmens erfolgt üblicherweise derart, dass die Glasscheibe in ein Unterteil eines Spritz- oder Schäumwerkzeugs eingelegt wird und sich anschließend zusammen mit einem Oberteil eine um die Glasscheibe bildende Kavität ergibt, in die das weiche Kunststoffmaterial eingebracht wird. Um große Gaseinschlüsse zu vermeiden, wird entweder abgesaugt oder ein Austritt vom PUR-Material erlaubt. Die Materialzufuhr für das weiche PUR-Material und/oder die Absaugung erfolgt üblicherweise im Bereich der Schnittstelle zwischen dem Ober- und dem Unterteil des Werkzeugs im Bereich der Seitenfläche der Glasscheibe und des entstehenden Rahmens. Nach dem Aushärten ergeben sich dann seitliche abstehende Angussstellen oder Entlüftungsstellen, die durch ein abstehendes, hartes PUR-Material gebildet sind. Diese überstehenden Abschnitte werden durch spanendes Bearbeiten entfernt.

Die DE 10 2011 053 166 A1 offenbart ein Verfahren sowie eine Vorrichtung zur Herstellung einer Scheibeneinheit aus einer Glasscheibe und einem Rahmen. Zur Herstellung der Scheibeneinheit wird zunächst ein Hilfsrahmen und dann der Rahmen ausgebildet. Nach dem Herstellen des Rahmens wird die Scheibeneinheit aus der Spritzform entnommen und der Hilfsrahmen entfernt.

Ein Formwerkzeug zur Herstellung einer Scheibeneinheit aus einer Glasscheibe und einem Rahmen ist in der EP 2 253 447 A1 gezeigt. Das Formwerkzeug weist dabei einen Hilfshohlraum auf, der einem nicht zu umspritzenden Abschnitt der Glasplatte zugeordnet ist und der in Strömungsverbindung mit einem Hohlraum steht, der einem zu umspritzenden Abschnitt der Glasplatte zugeordnet ist.

Die EP 1 859 931 A1 zeigt ein Verbundbauteil für ein Fahrzeug-Dachsystem mit einer ersten und einer zweiten Scheibe, die miteinander durch eine Kleberschicht verbunden sind, in die wenigstens ein Trägerteil eingebettet ist.

Eine Konsolenbaugruppe sowie ein Verfahren zu deren Herstellung wird in der EP 0 576 179 A1 vorgestellt. Die Konsolenbaugruppe umfasst ein Verkleidungselement und ein randseitiges Dichtungselement, wobei das Verkleidungselement und das Dichtungselement separat voneinander hergestellt und anschließend miteinander verbunden werden.

Ein Dekorglasplatte mit einer farbig lackierten Glasplatte und zusätzlichen funktionalen Schichten ist in der EP 1 894 901 A1 offenbart. Bei den funktionalen Schichten handelt es sich beispielsweise um eine Heizschicht oder um eine passive Wärmeisolationsschicht.

Aufgabe der Erfindung ist es, ein kostengünstiger herzustellendes Fahrzeugdachglaselement sowie ein Verfahren zu seiner Herstellung vorzuschlagen.

Dies wird bei einem Fahrzeugdachglaselement der eingangs genannten Art dadurch erreicht, das alle Angussstellen und Entlüftungsstellen des Rahmens auf der Innenseite der Glasscheibe vorgesehen sind. Durch diese neue Anordnung der Anguss- und Entlüftungsstellen muss der Rahmen, der auch die nach außen weisende Seitenfläche der Glasscheibe abdeckt, in diesem Bereich nicht mechanisch nachbearbeitet werden, was besonders aufwendig ist und darüber hinaus auch zu einer raueren Oberfläche führt. Beim Gießen oder Spritzen ist nämlich die Oberfläche zum Werkzeug hin sehr glatt, und diese glatte Oberfläche wird durch die spanende Bearbeitung zerstört. Ferner kann das Fahrzeugglaselement bezüglich seiner Umrissgeometrie und Abmaße exakt hergestellt werden, denn eine mechanische Nachbearbeitung ist im Umfangsbereich des Rahmens nicht mehr notwendig. Die Isolationsschicht selbst ist transparent und sorgt z. B. für eine Schallisolierung sowie eine Tönung der Glasscheibe, sodass ein UV- und/oder IR-Filter durch sie gebildet ist.

Die transparente Insolationsschicht sollte zumindest einen Durchsichtsbereich der Glasscheibe, in dem das fertige Glaselement transparent ist, vollflächig abdecken. Dieser üblicherweise mittige Bereich der Glasscheibe wird dann von einem nicht durchsichtigen Randabschnitt, der durch den Rahmen gebildet ist, umgrenzt.

Optional kann innenseitig unter dem gesamten Randabschnitt eine Keramikschicht auf die Glasscheibe aufgebracht sein, d. h. unmittelbar auf die Glasscheibe. Diese Keramikschicht ist üblicherweise ein Schwarzdruck, der einerseits die Adhäsion des Materials des Rahmens verbessert und andererseits die Sicht von außen auf das Schaum- oder Spritzmaterial des Rahmens verhindert, sodass sich von außen ein hochwertiger Gesamteindruck auch im Bereich des Übergangs vom transparenten Teil, dem Durchsichtsbereich, zum Rahmen ergibt.

Natürlich kann, optional, auch eine Primer- und oder Aktivatorschicht zwischen Glasscheibe und transparenter Isolationsschicht vorgesehen sein.

Als Glasscheibe wird insbesondere ein Einscheibensicherheitsglas verwendet, welches höhere innere Spannungen als ein Verbundglas hat, leichter zu verarbeiten ist und im Werkzeug stabiler positioniert wird.

Der Rahmen kann und sollte vorzugsweise die Glasscheibe auf ihrer umlaufenden, nach außen weisenden Seitenfläche vollständig abdecken, sodass die Seitenfläche nirgends freiliegt. Das heißt, der Rahmen erstreckt sich vorzugsweise zur Vorderseite und schließt mit dieser bündig ab.

In den Rand lässt sich auch ein vorgefertigtes oder mehrere vorgefertigte Verstärkungsteile einbetten, insbesondere aus Metall. Diese Verstärkungsteile können rein zur Verstärkung des Fahrzeugdachglaselements vorhanden sein oder zur Anbindung an das Fahrzeugdach oder einen Antriebsmechanismus. Das Verstärkungsteil lässt sich zur Glasscheibe hin abstandshalterfrei ausführen, d. h., es ist kein separates Teil zwischen der Glasscheibe und dem Verstärkungsteil notwendig. Aber das Verstärkungsteil hat keinen direkten Kontakt mit der Glasscheibe, was ansonsten zu punktuellen Spannungen führen könnte. Eine Option, diesen direkten Kontakt zu vermeiden, besteht darin, zwischen der Glasscheibe und dem Verstärkungsteil nur die Isolationsschicht vorzusehen. Die Isolationsschicht erstreckt sich somit auch bis unterhalb des Rahmens.

Als Isolationsschicht kann eine PUR-Schicht, insbesondere mit einem sog. Reflow-Effekt vorgesehen sein. Dieser Reflow-Effekt sorgt dafür, dass die Oberfläche selbstschließend ist, wenn beispielsweise mit dem Fingernagel entlang gekratzt wird oder in die Isolationsschicht eingedrückt wird. Dies erhöht die Dauerqualität des Fahrzeugdachglaselements, und im Übrigen ist ein solches Material mit einer selbstheilenden Oberfläche auch sehr gut als Schallisolierungsmaterial geeignet.

Abschnittsweise können die Isolationsschicht und abschnittsweise die Keramikschicht direkt auf die Glasscheibe aufgebracht sein, sodass Zwischenschichten vermieden werden können. Ein weiterer Vorteil besteht darin, dass der Rahmen teilweise auf der Keramikschicht, teilweise auf der Glasscheibe und teilweise auf der Isolationsschicht sitzen kann. Damit sind mehrere Verbundabschnitte realisierbar, d. h., wenn sich einer dieser Verbunde zwischen zwei Materialien tatsächlich lösen würde, bestünden als Sicherung noch die anderen.

Die Isolationsschicht kann sich auch bis zum Rand der Glasscheibe erstrecken. Der Rahmen ist dann nur noch an der nach außen weisenden Seitenfläche mit der Glasscheibe unmittelbar verbunden, im übrigen Teil mit der Isolationsschicht. Unter der Isolationsschicht kann im Bereich des Rahmens auch die zuvor erwähnte Keramikschicht vorhanden sein. In diesem Fall sind für die Ankoppelung des Rahmens an die Glasscheibe zwei verschiedene Verbunde vorhanden, nämlich der direkte Verbund des Materials des Rahmens mit der Glasscheibe im Bereich der nach außen weisenden Seitenfläche und der Verbund zwischen dem Material des Rahmens und der Isolationsschicht. Die Isolationsschicht selbst hat dann aber auch zwei Verbunde, nämlich einmal direkt mit der Glasscheibe im Bereich des transparenten Durchsichtsbereichs und mit der Keramikschicht im Bereich des Rahmens.

Vorzugsweise ist der Rahmen mechanisch unbearbeitet. Dies kann dadurch ermöglicht werden, dass die Anguss- und Entlüftungsstellen auf der Innenseite des Rahmens beim Entformen einfach abbrechen. Eine entsprechende Positionierung und Dimensionierung der Angussstellen und Entlüftungsstellen ermöglicht eine solche kostengünstige Herstellungsvariante.

Die vorgenannte Aufgabe wird auch durch ein Verfahren zum Herstellen eines vorgenannten, erfindungsgemäßen Fahrzeugdachglaselements mit einer außenseitigen, werkstückseitigen Glasscheibe und einer innenseitig auf die werkstückseitige Glasscheibe aufgeschäumten, transparenten Isolationsschicht und einem am innenseitigen Randabschnitt der werkstückseitigen Glasscheibe vorgesehenen, aufgespritzten oder angeschäumten, umlaufenden Rahmen gelöst. Das erfindungsgemäße Verfahren ist insbesondere zum Herstellen eines erfindungsgemäßen Fahrzeugdachglaselements eingesetzt und ist durch folgende Schritte gekennzeichnet:
a) Positionieren einer werkstückseitigen Glasscheibe auf einem unteren Werkzeugteil,
b) Schließen des Werkzeugs durch eine obere Form, die zumindest abschnittsweise durch eine werkzeugseitige Glasscheibe gebildet ist, welche zumindest die Wölbungsgeometrie der eingelegten, werkstückseitigen Glasscheibe zumindest im Bereich eines aufzubringenden Isolationsmaterials hat,
c) flächiges Aufschäumen eines transparenten Isoliermaterials auf der Innenseite der werkstückseitigen Glasscheibe zur Bildung einer durchgehenden, transparenten Isolationsschicht zumindest in einem Durchsichtsbereich des Fahrzeugdachglaselements, und
d) nach dem Herstellen der transparenten Isolationsschicht wird ein umlaufender Rahmen angeschäumt oder aufgespritzt, wobei beim Spritzen oder Schäumen eine Anguss- und Absaugstelle für das einzubringende Material im Bereich des Randabschnitts der Innenseite der Glasscheibe vorgesehen sind.

Das erfindungsgemäße Verfahren sieht vor, die obere Form zumindest großteils, nämlich im Bereich des Kontakts mit dem Isoliermaterial, durch eine Glasscheibe zu ersetzen. Diese Glasscheibe (im Folgenden werkzeugseitige Glasscheibe) ist eine der zuvor produzierten Glasscheiben als potenzielles Teil des Fahrzeugdachglaselements. Die extrem teuren Formen können damit sehr günstig hergestellt werden. Es ist u. U. nur noch die Glasscheibe selbst als obere Form oder die Glasscheibe mit einem außenseitigen Rahmen notwendig, die dann die gesamte oder fast die gesamte obere Form bildet. Ein weiterer Vorteil dieser Lösung besteht darin, dass die Oberfläche der oberen Form durch das Glas besonders hochwertig ist. Allenfalls können Bohrungen in der Glasscheibe vorgesehen sein, mit denen die Anguss- und/oder Entlüftungsstellen gebildet sind. Diese Bohrungen sind jedoch primitiv in ihrer Herstellung und sorgen für keinen erwähnenswerten Kostenaufwand.

Beim erfindungsgemäßen Verfahren ist es nicht zwingend notwendig, dass ein Primer zum Aufspritzen oder Anschäumen des Rahmens verwendet wird und/oder dass ein Aktivator auf die Innenseite der werkstückseitigen Glasscheibe vor dem Aufschäumen der durchsichtigen Isolationsschicht aufgetragen wird. Es ist auch möglich, direkt auf die Glasscheibe aufzuspritzen oder aufzuschäumen.

Bei diesem Schäumprozess zur Herstellung des Rahmens wird ein Werkzeugteil zum Abdichten vorzugsweise direkt gegen die transparente Isolationsschicht aufgepresst, sodass hier nicht zwingend im Werkzeug aufwendige Dichtungen notwendig sind. Die Isolationsschicht aus Kunststoff gibt die notwendige Flexibilität und auch die notwendige Eindrücktiefe, die es erlaubt, das Werkzeug dichtend gegen die zuvor hergestellte Einheit aus Glasscheibe und Isolationsschicht zu drücken und hier abzudichten.

Nach dem Herstellen des Rahmens findet keine spanende Nachbearbeitung des Fahrzeugdachglaselements mehr statt.

Weitere Merkmale und Vorteile der Erfindung ergeben sich auch den nachfolgenden Beschreibungen und aus den nachfolgenden Zeichnungen, auf die Bezug genommen wird.

In den Zeichnungen zeigen:
- Figur 1 eine perspektivische Draufsicht auf ein erfindungsgemäßes Fahrzeugdachglaselement,
- Figur 2 eine Schnittansicht längs der Linie II - II nach Figur 1 im Bereich des vorderen Randes des Fahrzeugdachglaselements,
- Figur 3 eine Schnittansicht längs der Linie III - III in Figur im Bereich des hinteren Randes des Fahrzeugdachglaselements,
- Figur 4 eine Schnittansicht längs der Linie IV - IV in Figur 1 im Bereich eines Seitenrandes des Fahrzeugdachglaselements,
- Figur 5 eine Schnittansicht durch ein Werkzeug zum Herstellen eines Fahrzeugdachglaselements, bei dem die Isolationsschicht angeschäumt wird, und
- Figur 6 eine Schnittansicht durch ein im Verfahren eingesetztes Werkzeug zum Herstellen des Rahmens.

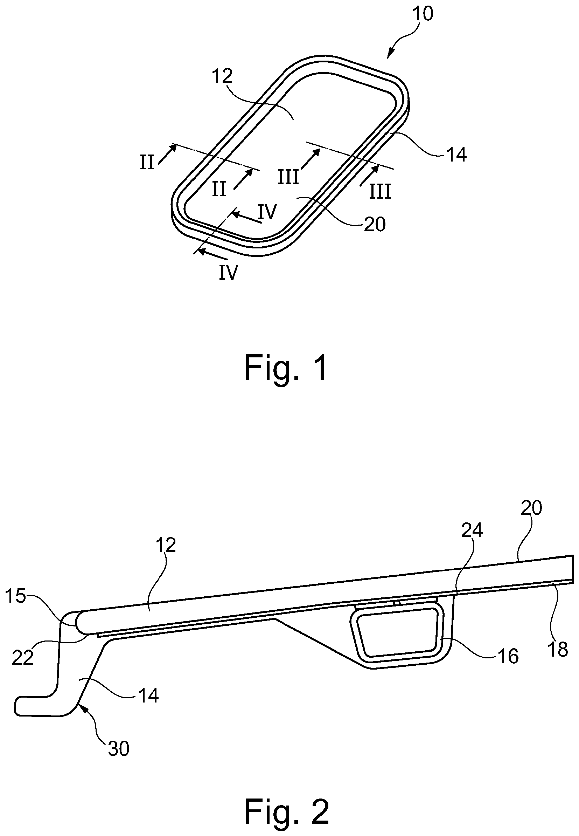

In Figur 1 ist ein Fahrzeugdachglaselement dargestellt, das beispielsweise der verschiebbare werkstückseitige Glasdeckel eines Fahrzeugschiebe- oder Fahrzeughebedachs ist oder der Glasdeckel eines Panoramadachs.

Außenseitig wird das Fahrzeugdachglaselement 10 durch eine Glasscheibe 12 gebildet, insbesondere aus Einscheibensicherheitsglas, welches zumindest fast oder die gesamte Außenseite des Fahrzeugdachglaselements 10 definiert.

Die Glasscheibe 12 wird innenseitig durch einen geschlossenen umlaufenden Rahmen 14 stabilisiert, der durch Spritzen oder Schäumen hergestellt ist.

Der Rahmen 14 ist im vorliegenden Fall ein nicht transparenter Rahmen vorzugsweise aus geschäumtem PUR-Material, welches auf die Glasscheibe 12 in einem Randabschnitt geschäumt wird.

Wie in den Figuren 2-4 zu sehen ist, verläuft der Rahmen 14 an den nach außen weisenden Seitenflächen 15 der Glasscheibe 12 und an der Innenseite der Glasscheibe 12.

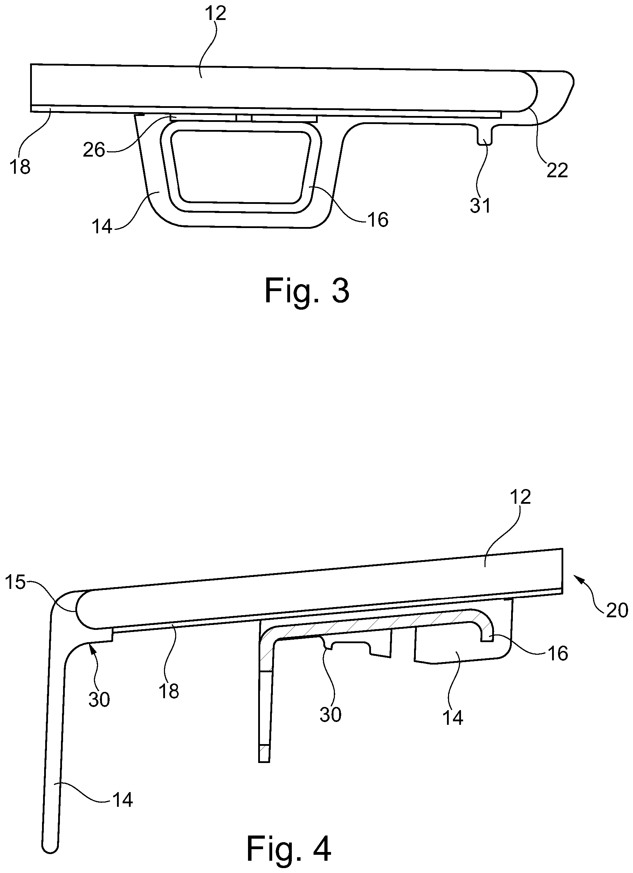

In das PUR-Material, welches den Rahmen 14, sind mehrere Verstärkungsteile 16 aus Metall eingebettet. In den Figuren 2 und 3 sind rohrförmige, langgestreckte Verstärkungsteile 16 dargestellt, die in den Rahmen 14 eingebettet sind und die von der Glasscheibe 12 beabstandet sind.

Eine innenseitig auf die Glasscheibe 12 aufgeschäumte Isolationsschicht 18 hat optional (abhängig davon, ob noch ein Primer vorgesehen ist oder nicht) unmittelbaren Kontakt mit der Glasscheibe 12 und ist aus einem Kunststoffmaterial, welches einen sog. Reflow-Effekt hat. Die Isolationsschicht 18 ist deshalb relativ weich und kann mit dem Fingernagel etwas eingedrückt werden, wobei diese Eindrückstelle sich nach einiger Zeit wieder selbsttätig schließt.

Die Isolationsschicht 18 dient z. B. dazu, eine Schallisolierung und/oder einen UV- und/oder IR-Filter zu bilden.

In dem zentralen, sog. Durchsichtsbereich 20 (siehe auch Figur 1) des Fahrzeugdachglaselements 10, der von dem Rahmen 14 umschlossen wird, ist nämlich das Fahrzeugdachglaselement 10 transparent und wird in diesem Bereich nur durch die Glasscheibe 12 und die transparente Isolationsschicht 18 gebildet, die diesen Bereich der Glasscheibe 12 vollflächig abdeckt.

Die Isolationsschicht erstreckt sich bis zum oder bis nahe zum sog. Rand 22, welcher den Übergang von der Innenseite zu der Seitenfläche 15 bildet. Innenseitig schließt sich der Randabschnitt an den Rand 22 an.

Unmittelbar auf die Glasscheibe 12 und zwar unterhalb des Rahmens 14 ist eine Keramikschicht aufgebracht, die sich vom innenseitigen Ende 24 des Rahmens 14 bis zum Rand 22 erstreckt und den umlaufenden Randabschnitt der Glasscheibe 12 innenseitig abdeckt. Die Keramikschicht ist vorzugsweise schwarz und lässt von außen keine Sicht auf das PUR-Material des Rahmens zu. Da die Keramikschicht jedoch extrem dünn ist, ist sie in den Figuren 2-4 nicht erkennbar.

Wie in den Figuren 2 und 3 ferner zu sehen, liegt das Verstärkungsteil 16 oder mit ihm verbundene Teile 26 auf der Isolationsschicht 18 auf, ohne dass Abstandshalter als separate vorgefertigte Teile vorgesehen sein müssen, die einen Abstand zur Glasscheibe 12 für die Verstärkungsteile 16 sichern.

Optional kann auf die Keramikschicht, die auch die UV-Beständigkeit des PUR-Materials erhöht, ein Primer und/oder ein Aktivator aufgebracht werden, bevor anschließend das PUR aufgeschäumt wird, um den Rahmen 14 zu bilden.

Natürlich kann auch innenseitig auf die gesamte Glasscheibe eine Primer-und/oder Aktivatorschicht aufgebracht werden, bevor die Isolationsschicht 18 aufgebracht wird. Auch dies dient der verbesserten Adhäsion.

Eine Schutzfolie ist nicht vorgesehen.

Die transparente Isolationsschicht 18 hat vorzugsweise eine konstante Dicke, insbesondere im Bereich von 0,5-1,5 mm.

Im Schnitt gemäß Figur 4 ist zu sehen, dass das Verstärkungsteil 16 als abgewinkeltes Blech ausgeführt ist, welches mit einem Schenkel im Rahmen 14 eingebettet ist und mit einem Schenkel aus dem entsprechenden PUR-Material herausragt, um in diesem Bereich an den Antrieb des Fahrzeugschiebe- und/oder - hebedachs angekoppelt zu werden.

Im Bereich der Seitenränder, die in Figur 4 zu sehen sind, kann der Rahmen 14 auch Abschnitte haben, die nicht ineinander übergehen, hier beispielsweise einen äußeren Abschnitt, der von der Seitenfläche 15 ausgeht, und einen davon beabstandeten innen liegenden Abschnitt, in den das Verstärkungsteil 16 eingebettet ist.

Der Rahmen 14 ist mechanisch unbearbeitet, und die Anguss- und Entlüftungsstellen 30 bzw. 31 zur Herstellung des Rahmens beim Spritzen oder Gießen sind ausschließlich auf der Innenseite der Glasscheibe 12 vorgesehen.

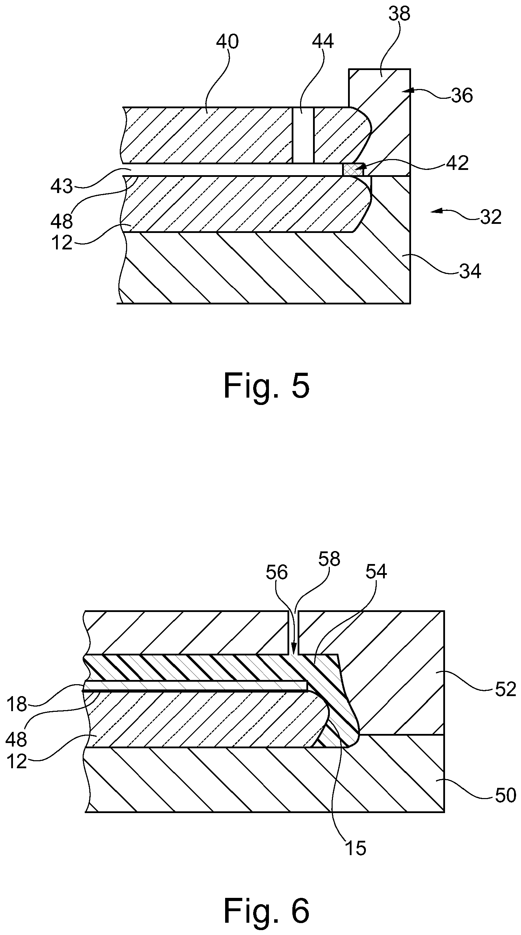

Anhand der Figuren 5 und 6 wird die Herstellung des Fahrzeugdachglaselements dargestellt, nämlich im Wesentlichen in zwei Schritten.

In Figur 5 ist ein Werkzeug 32 dargestellt, in welches die werkstückseitige Glasscheibe 12 eingelegt ist, und zwar in oder auf ein sog. unteres Werkzeugteil 34, das eine untere Formhälfte sein kann. Die Rückseite der Glasscheibe blickt dann nach oben. In diesen Werkzeug 32 wird dann die Isolationsschicht 18 aufgebracht.

Die obere Form 36 (evtl. Formhälfte) umfasst einen Rahmen 38, in dem eine weitere, werkzeugseitige Glasscheibe 40 untergebracht und daran befestigt ist. Die Glasscheibe 40 entspricht zumindest im Bereich der aufzubringenden Isolationsschicht 18 in der Wölbungsgeometrie exakt der eingelegten Glasscheibe 12 und kann sogar ein Gleichteil sein, welches sehr kostengünstig hergestellt ist. Die weitere Glasscheibe 40 ist damit Teil der oberen Formhälfte 36.

Eine Dichtung 42 am Rahmen 38 dichtet die obere Form 36 zur Glasscheibe 12 ab, wobei zwischen den Glasscheiben 12 und 40 ein geringer Spalt 43 gebildet ist. Die Glasscheibe 40 kann optional mehrere Öffnungen 44 zum Einbringen von flüssigem Kunststoff in die zwischen dem Werkzeug 32 und der Glasscheibe 12 vorhandene Kavität sein, der die Isolationsschicht 18 bildet. Einige der Öffnungen 44 sind auch als Dichtungs- oder Absaugöffnungen ausgebildet. Optional können die Öffnungen auch im Bereich des Rahmens 38 ausgebildet sein. Nachdem der Spalt 42 ausgeschäumt ist, wird die obere Form 36 nach oben abgenommen, sodass die Einheit aus Glasscheibe 12 und Isolationsschicht 18 entsteht. In den Figuren 5 und 6 ist mit einer dicken Linie auch die Keramikschicht 48 dargestellt.

Figur 6 zeigt ebenfalls eine untere Formhälfte 50 sowie eine obere Formhälfte 52, die zusammen mit der darin eingelegten Einheit aus Glasscheibe 12 und Isolationsschicht 18 eine Kavität 54 begrenzen, die ausgespritzt oder ausgeschäumt wird, und zwar mit PUR-Material. Dieses PUR-Material bildet dann den Rahmen.

Nicht in Figur 6 gezeigt sind die Bereiche des Werkzeugs, in denen die Verstärkungsteile 16 positioniert sind, die beim Umspritzen oder Umschäumen gleich in das PUR-Material eingebettet werden.

Gut zu sehen ist in Figur 6, dass eine von zahlreichen Anguss- und Entlüftungsstellen 56 nicht seitlich im Bereich der Seitenfläche 15 vorgesehen ist, sondern auf der Innenseite der Glasscheibe 12, die auch im Werkzeug nach Figur 6 nach oben weist. Beim Entformen reißt der sich in der entsprechenden Öffnung 58 in der oberen Formhälfte 52 befindliche PUR-Tropfen vom Rest des inzwischen ausgehärteten PUR-Schaumes ab, sodass die Anguss- und/oder Entlüftungsstelle nicht nach außen vorsteht.

Eine mechanische spanende Bearbeitung ist nicht mehr erforderlich, insbesondere auch nicht im Bereich der nach außen weisenden Seitenfläche des entstehenden Rahmens.

Nach dem Herstellen des Rahmens 14 bleiben vorzugsweise alle Anguss- und Entlüftungsstellen 30, 31 nicht abgedeckt, d.h. sie werden nicht umschäumt oder umspritzt oder lackiert oder mit anderen Teilen abgedeckt..

## Patentansprüche

1. Fahrzeugdachglaselement, mit einer außenseitigen Glasscheibe (12) und einer innenseitig auf die Glasscheibe (12) aufgeschäumten, transparenten Isolationsschicht (18) und einem am innenseitigen Randabschnitt der Glasscheibe (12) vorgesehenen, aufgespritzten oder angeschäumten, sich bis zum Rand (22) erstreckenden, umlaufenden Rahmen (14), **dadurch gekennzeichnet, dass** alle Angussstellen (30) und Entlüftungsstellen (31) des Rahmens (14) auf der Innenseite vorgesehen sind.

2. Fahrzeugdachglaselement nach Anspruch 1, **dadurch gekennzeichnet, dass** die transparente Isolationsschicht (18) zumindest einen Durchsichtsbereich (20) der Glasscheibe (12), in dem das fertige Glaselement (10) transparent ist, vollflächig abdeckt.

3. Fahrzeugdachglaselement nach Anspruch 1 oder 2, **dadurch gekennzeichnet, dass** innenseitig unter dem gesamten Randabschnitt eine Keramikschicht (48) auf die Glasscheibe (12) aufgebracht ist und/oder dass eine Primer- und/oder Aktivatorschicht zwischen Glasscheibe (12) und transparenter Isolationsschicht (18) vorgesehen ist.

4. Fahrzeugdachglaselement nach einem der vorhergehenden Ansprüche, **dadurch gekennzeichnet, dass** die Glasscheibe (12) ein Einscheibensicherheitsglas ist und/oder dass die Glasscheibe (12) eine umlaufende, nach außen weisende Seitenfläche (15) hat, die vom Rahmen (14) vollständig abgedeckt ist.

5. Fahrzeugdachglaselement nach einem der vorhergehenden Ansprüche, **dadurch gekennzeichnet, dass** sich die Isolationsschicht (18) bis zum Rand (22) der Glasscheibe (12) erstreckt.

6. Fahrzeugdachglaselement nach einem der vorhergehenden Ansprüche, **dadurch gekennzeichnet, dass** in den Rahmen (14) mindestens ein vorgefertigtes Verstärkungsteil (16) eingebettet ist, insbesondere ein Verstärkungsteil (16) aus Metall.

7. Fahrzeugdachglaselement nach Anspruch 6, **dadurch gekennzeichnet, dass** das Verstärkungsteil (16) zur Glasscheibe (12) hin abstandshalterfrei ausgeführt und ohne direkten Kontakt mit der Glasscheibe (12) ist, insbesondere dass zumindest abschnittsweise zwischen der Glasscheibe (12) und dem Verstärkungsteil (16) nur die Isolationsschicht (18) vorhanden ist.

8. Fahrzeugdachglaselement nach einem der vorhergehenden Ansprüche, **dadurch gekennzeichnet, dass** die Isolationsschicht (18) eine PUR-Schicht, insbesondere mit einem Reflow-Effekt, ist.

9. Fahrzeugdachglaselement nach einem der vorhergehenden Ansprüche, **dadurch gekennzeichnet, dass** abschnittsweise die Isolationsschicht (18) und abschnittsweise eine Keramikschicht (48) direkt auf die Glasscheibe (12) aufgebracht sind.

10. Fahrzeugdachglaselement nach einem der vorhergehenden Ansprüche, **dadurch gekennzeichnet, dass** der Rahmen (14) mechanisch unbearbeitet ist.

11. Verfahren zum Herstellen eines Fahrzeugdachglaselements nach einem der vorhergehenden Ansprüche, mit einer außenseitigen, werkstückseitigen Glasscheibe (12) und einer innenseitig auf die werkstückseitige Glasscheibe (12) aufgeschäumten, transparenten Isolationsschicht (18) und einem am innenseitigen Randabschnitt der werkstückseitigen Glasscheibe (12) vorgesehenen, aufgespritzten oder angeschäumten, umlaufenden Rahmen (14), , **gekennzeichnet durch** folgende Schritte:
a. Positionieren der werkstückseitigen Glasscheibe (12) auf einem unteren Werkzeugteil,
b. Schließen des Werkzeuges durch eine obere Form, die zumindest abschnittsweise durch eine werkzeugseitige Glasscheibe (40) gebildet ist, welche zumindest die Wölbungsgeometrie der eingelegten werkstückseitigen Glasscheibe (12) zumindest im Bereich der aufzubringenden Isolationsschicht hat,
c. flächiges Aufschäumen eines transparenten Isoliermaterials auf der Innenseite der werkstückseitigen Glasscheibe (12) zur Bildung einer durchgehenden, transparenten Isolationsschicht (18) zumindest in einem Durchsichtsbereich (20) des Fahrzeugdachglaselements (10), und
d. nach dem Herstellen der transparenten Isolationsschicht (22) ein umlaufender Rahmen (14) angeschäumt oder angespritzt wird, wobei beim Spritzen oder Schäumen alle Anguss- und Entlüftungsstellen (30, 31) für das einzubringende Material im Bereich des Randabschnitts der Innenseite der werkstückseitigen Glasscheibe (12) vorgesehen sind.

12. Verfahren nach Anspruch 11, **dadurch gekennzeichnet, dass** kein Primer zum Aufspritzen oder Anschäumen des Rahmens (14) verwendet wird und/oder dass ein Aktivator auf die Innenseite der werkstückseitigen Glasscheibe (12) vor dem Schäumen der durchsichtigen Isolationsschicht (18) aufgetragen wird.

13. Verfahren nach einem der Ansprüche 11 bis 12, **dadurch gekennzeichnet, dass** nach dem Herstellen des Rahmens (14) keine spanende Nachbearbeitung des Fahrzeugdachglaselements mehr stattfindet und/oder dass nach dem Herstellen des Rahmens (14) alle Anguss- und Entlüftungsstellen (30, 31) nicht abgedeckt werden.

## Claims

1. A vehicle roof glass element, having an exterior glass pane (12) and a transparent insulating layer (18) foamed onto the glass pane (12) on the inside, and a circumferential frame (14) which is provided on the interior rim portion of the glass pane (12) and applied thereon by injection molding or foaming and which extends up to the rim (22), **characterized in that** all runner points (30) and ventilation points (31) of the frame (14) are provided on the inside.

2. The vehicle roof glass element according to claim 1, **characterized in that** the transparent insulating layer (18) at least covers the entire surface of a see-through area (20) of the glass pane (12) in which the finished glass element (10) is transparent.

3. The vehicle roof glass element according to claim 1 or 2, **characterized in that** a ceramic layer (48) is applied on the inside onto the glass pane (12) below the entire rim portion, and/or **in that** a primer and/or activator layer is provided between the glass pane (12) and the transparent insulating layer (18).

4. The vehicle roof glass element according to any of the preceding claims, **characterized in that** the glass pane (12) is a single-pane safety glass, and/or **in that** the glass pane (12) has a circumferential side face (15) which faces outwards and is entirely covered by the frame (14).

5. The vehicle roof glass element according to any of the preceding claims, **characterized in that** the insulating layer (18) extends up to the rim (22) of the glass pane (12).

6. The vehicle roof glass element according to any of the preceding claims, **characterized in that** at least one prefabricated reinforcing part (16), in particular a reinforcing part (16) of metal, is embedded in the frame (14).

7. The vehicle roof glass element according to claim 6, **characterized in that** the reinforcing part (16) is configured without distance piece towards the glass pane (12) and without direct contact with the glass pane (12), in particular **in that** merely the insulating layer (18) is present at least in sections between the glass pane (12) and the reinforcing part (16).

8. The vehicle roof glass element according to any of the preceding claims, **characterized in that** the insulating layer (18) is a PUR layer, in particular with a reflow effect.

9. The vehicle roof glass element according to any of the preceding claims, **characterized in that** the insulating layer (18) and a ceramic layer (48) are directly applied in sections onto the glass pane (12).

10. The vehicle roof glass element according to any of the preceding claims, **characterized in that** the frame (14) is mechanically unmachined.

11. A method of manufacturing a vehicle roof glass element according to any of the preceding claims, having an exterior workpiece-side glass pane (12) and a transparent insulating layer (18) foamed on the inside onto the workpiece-side glass pane (12) and a circumferential frame (14) which is provided on the interior rim portion of the workpiece-side glass pane (12) and applied by injection molding or foaming, **characterized by** the following steps:
a. positioning the workpiece-side glass pane (12) onto a lower tool piece,
b. closing the tool by an upper mold which is formed by a tool-side glass pane (12) at least in sections, which has at least the camber geometry of the inserted workpiece-side glass pane (12) at least in the region of the insulating layer which is to be applied,
c. foaming a transparent insulating material in a planar manner onto the inside of the workpiece-side glass pane (12) so as to form a continuous transparent insulating layer (18) at least in a see-through area (20) of the vehicle roof glass element (10), and
d. applying, by foaming or injection molding, a circumferential frame (14) after the manufacture of the transparent insulating layer (22), all runner points and ventilation points (30, 31) for the material to be introduced being provided in the region of the rim portion of the inside of the workpiece-side glass pane (12) during injection molding or foaming.

12. The method according to claim 11, **characterized in that** no primer is used for applying the frame (14) by injection molding or foaming and/or **in that** an activator is deposited on the inside of the workpiece-side glass pane (12) prior to the foaming of the transparent insulating layer (18).

13. The method according to either of claims 11 to 12, **characterized in that** no cutting finishing of the vehicle roof glass element takes place after the manufacture of the frame (14), and/or **in that** all runner points and ventilation points (30, 31) are not covered after the manufacture of the frame (14).

## Revendications

1. Élément de toit de véhicule en verre, comprenant une vitre (12) côté extérieur et une couche isolante transparente (18) surmoulée par moussage côté intérieur sur la vitre (12), et un cadre circonférentiel (14) qui est prévu sur le tronçon de bord côté intérieur de la vitre (12), qui est surmoulé par injection ou par moussage et qui s'étend jusqu'au bord (22), **caractérisé en ce que** tous les culots (30) et points d'aération (31) du cadre (14) sont prévus du côté intérieur.

2. Élément de toit de véhicule en verre selon la revendication 1, **caractérisé en ce que** la couche isolante transparente (18) recouvre au moins l'entière surface d'une zone de vue à travers (20) de la vitre (12) dans laquelle l'élément en verre (10) fini est transparent.

3. Élément de toit de véhicule en verre selon la revendication 1 ou 2, **caractérisé en ce qu'**une couche en céramique (48) est appliquée sur la vitre (12) du côté intérieur au-dessous de tout le tronçon de bord, et/ou **en ce qu'**une couche de fond et/ou d'activateur est prévue entre la vitre (12) et la couche isolante transparente (18).

4. Élément de toit de véhicule en verre selon l'une des revendications précédentes, **caractérisé en ce que** la vitre (12) est un verre de sécurité trempé, et/ou **en ce que** la vitre (12) présente une face latérale (15) circonférentielle qui est tournée vers l'extérieur et qui est entièrement recouverte par le cadre (14).

5. Élément de toit de véhicule en verre selon l'une des revendications précédentes, **caractérisé en ce que** la couche isolante (18) s'étend jusqu'au bord (22) de la vitre (12).

6. Élément de toit de véhicule en verre selon l'une des revendications précédentes, **caractérisé en ce qu'**au moins une pièce de renforcement (16) préfabriquée est noyée dans le cadre (14), en particulier une pièce de renforcement (16) en métal.

7. Élément de toit de véhicule en verre selon la revendication 6, **caractérisé en ce que** la pièce de renforcement (16) est réalisée sans écarteur vers la vitre (12) et sans contact direct avec la vitre (12), en particulier **en ce qu'**au moins par tronçons, uniquement la couche isolante (18) est présente entre la vitre (12) et la pièce de renforcement (16).

8. Élément de toit de véhicule en verre selon l'une des revendications précédentes, **caractérisé en ce que** la couche isolante (18) est une couche de PUR, en particulier à effet Reflow.

9. Élément de toit de véhicule en verre selon l'une des revendications précédentes, **caractérisé en ce que** la couche isolante (18) et la couche en céramique (48) sont, par tronçons, directement appliquées sur la vitre (12).

10. Élément de toit de véhicule en verre selon l'une des revendications précédentes, **caractérisé en ce que** le cadre (14) est mécaniquement non usiné.

11. Procédé de fabrication d'un élément de toit de véhicule en verre selon l'une des revendications précédentes, comprenant une vitre (12) côté extérieur côté pièce à usiner, et une couche isolante transparente (18) surmoulée par moussage du côté intérieur sur la vitre (12) côté pièce à usiner, et un cadre circonférentiel (14) qui est prévu sur le tronçon de bord côté intérieur de la vitre (12) côté pièce à usiner et qui est surmoulé par injection ou par moussage, **caractérisé par** les étapes suivantes :
a. positionnement de la vitre (12) côté pièce à usiner sur une pièce d'outil inférieure,
b. fermeture de l'outil par un moule supérieur formé au moins par tronçons par une vitre (40) côté outil qui présente au moins la géométrie de courbure de la vitre (12) côté pièce à usiner insérée au moins dans la zone de la couche isolante à appliquer,
c. surmoulage par moussage d'une matière isolante transparente de manière plane du côté intérieur de la vitre (12) côté pièce à usiner pour former une couche isolante transparente (18) ininterrompue au moins dans une zone de vue à travers (20) de l'élément de toit de véhicule en verre (10), et
d. surmoulage par moussage ou par injection, d'un cadre circonférentiel (14) après la fabrication de la couche isolante transparente (22), tous les culots et tous les points d'aération (30, 31) pour la matière à introduire étant prévu dans la zone du tronçon de bord du côté intérieur de la vitre (12) côté pièce à usiner lors du moulage par injection ou par moussage.

12. Procédé selon la revendication 11, **caractérisé en ce qu'**aucune couche de fond n'est utilisée pour le surmoulage du cadre (14) par injection ou par moussage, et/ou **en ce qu'**un activateur est déposé sur le côté intérieur de la vitre (12) côté pièce à usiner avant le moulage par moussage de la couche isolante transparente (18).

13. Procédé selon l'une des revendications 11 à 12, **caractérisé en ce qu'**après la fabrication du cadre (14), un réusinage par enlèvement de copaux de l'élément de toit de véhicule en verre n'a plus lieu et/ou **en ce qu'**après la fabrication du cadre (14), tout les culots et les points d'aération (30, 31) ne sont par recouverts.
